# EUROPEAN PATENT APPLICATION

(11) **EP 4 765 456 A1**
(43) Date of publication of application: **24.06.2026**
(21) Application number: 25833587.6
(22) Date of filing: 01.07.2025
(51) Int. Cl.: H01M 50/538, H01M 10/04, H01M 50/249, B60K 1/04

(54) **BATTERY, BATTERY PACK, AND VEHICLE INCLUDING SAME**

(30) Priority: 05.07.2024 KR 20240089191; 18.06.2025 KR 20250080485
(71) Applicant: LG Energy Solution, Ltd., Seoul 07335 (KR)
(72) Inventor: KO, Kwang-Hun, Daejeon 34122 (KR); HWANG, Dong-Sung, Daejeon 34122 (KR); KIM, Geon-Guk, Daejeon 34122 (KR); CHOI, Hyeon-Woo, Daejeon 34122 (KR)
(74) Representative: Goddar, Heinz J.
(86) International application number: PCT/KR2025/009374
(87) International publication number: WO 2026/010340

(57) **Abstract**

A battery according to the present disclosure may include: an electrode assembly configured by winding a first electrode and a second electrode with a separator interposed therebetween around a central axis of a central winding hole; a cell housing configured to store the electrode assembly and having an opening on one side; and a current collector electrically connected to the electrode assembly and the cell housing, respectively, and having a peripheral portion on its edge, and the peripheral portion may include: one or more contacting peripheral portions that are in contact with the cell housing; and one or more variable peripheral portions configured to be deformable.

## Description

### TECHNICAL FIELD

The present disclosure relates to a battery, a battery pack, and a vehicle including the same and, more specifically, to a battery and battery pack with improved assemblability and quality, and a vehicle including the same.

This application is based on and claims priority from Korean Patent Application No. 10-2024-0089191, filed on July 05, 2024, and Korean Patent Application No. 10-2025-0080485, filed on June 18, 2025, with the Korean Intellectual Property Office, the disclosure of which is incorporated herein in its entirety by reference.

### BACKGROUND ART

Recently, the demand for portable electronic products such as laptops, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway.

Currently commercialized secondary batteries include nickel-cadmium batteries, nickel-metal hydride batteries, nickel-zinc batteries, and lithium-ion secondary batteries. Among them, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. These lithium-ion secondary batteries are assembled into a compact structure by overlapping or stacking multiple battery cells themselves or multiple battery cells mounted in cartridges, and then the structures are electrically connected to configure a battery module or battery pack.

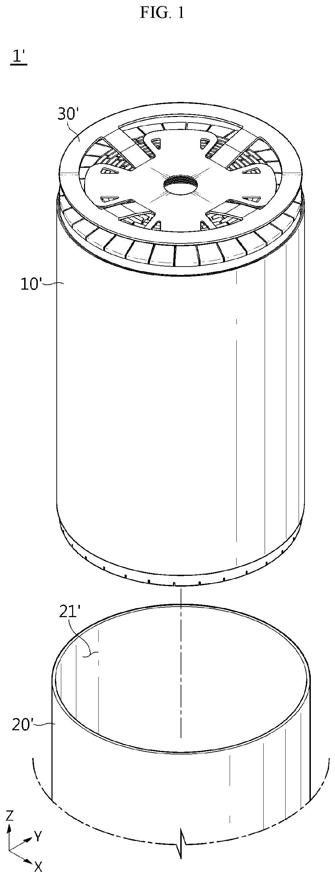

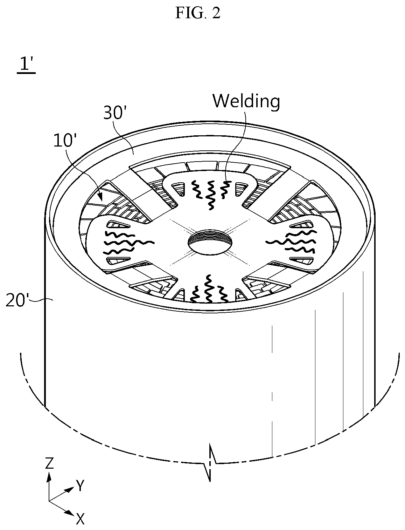

FIG. 1 is a drawing illustrating a conventional battery before an electrode assembly having a current collector coupled thereto is inserted and coupled to a cell housing, and FIG. 2 is a drawing illustrating a conventional battery after an electrode assembly having a current collector coupled thereto is inserted and coupled to a cell housing.

Referring to FIGS. 1 and 2, a cylindrical battery 1' may include a current collector 30'. The current collector 30' may be connected to the negative electrode of an electrode assembly 10' and a metal can 20' (cell housing). The cylindrical battery 1' including the current collector 30' may be manufactured by connecting the current collector 30' to the electrode assembly 10', inserting the electrode assembly 10' coupled with the current collector 30' into the metal can 20', and connecting them.

It may be important that the current collector 30' and the electrode assembly 10' be connected so as to be concentric with each other. If the center of the current collector 30' and the center of the electrode assembly 10' are significantly misaligned with each other, the current collector 30' may get caught on the metal can 20' when the electrode assembly 10' is inserted into the metal can 20', making the insertion difficult. Even if the current collector 30' and the electrode assembly 10' are forcibly inserted into the metal can 20', the current collector 30', the electrode assembly 10', or the metal can 20' may be unintentionally deformed. In addition, if the outer circumference of the current collector 30' and the inner wall of the metal can 20' do not exactly meet, the welding joint between the current collector 30' and the metal can 20' may become impossible. Nevertheless, it is very difficult to precisely align the centers of the current collector 30' and electrode assembly 10' with each other in the process.

Therefore, it is urgent to provide a method capable of easily and firmly inserting the current collector and the electrode assembly into the metal can and reliably welding the negative-electrode current collector to the metal can even when the current collector and the electrode assembly are eccentrically positioned relative to each other.

### DISCLOSURE

### Technical Problem

The present disclosure is designed to solve the problems of the related art, and therefore the present disclosure is directed to providing a battery and battery pack capable of easily and firmly inserting the current collector and the electrode assembly into the cell housing even when the current collector and the electrode assembly are eccentrically positioned relative to each other, and a vehicle including the same.

In addition, the present disclosure is also to provide a battery and battery pack enabling the current collector to be in exact contact with the cell housing even when the current collector and the electrode assembly are eccentrically positioned relative to each other, so that the current collector and the cell housing may be effectively coupled to each other, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly configured by winding a first electrode and a second electrode with a separator interposed therebetween around a central axis of a central winding hole; a cell housing configured to store the electrode assembly and having an opening on one side; and a current collector electrically connected to the electrode assembly and the cell housing, respectively, and having a peripheral portion on its edge, wherein the peripheral portion may include: one or more contacting peripheral portions that are in contact with the cell housing; and one or more variable peripheral portions configured to be deformable.

The contacting peripheral portion may be welded to the cell housing.

The contacting peripheral portion may have an arc shape when viewed from a direction parallel to the central axis of the central winding hole.

The contacting peripheral portion may include an outer peripheral portion disposed on an outer side of the contacting peripheral portion and extending in a direction parallel to the central axis of the central winding hole.

The variable peripheral portion may be configured such that its circumferential length is changed when pressurized.

The variable peripheral portion may be configured to be folded when pressurized.

The variable peripheral portion may include a folding guide portion configured to guide the folding when pressurized.

The variable peripheral portion may be configured to be folded while protruding in a direction away from the electrode assembly when pressurized.

The peripheral portion may include a plurality of contacting peripheral portions and a plurality of variable peripheral portions, and the plurality of contacting peripheral portions and the plurality of variable peripheral portions are disposed alternately with each other.

The peripheral portion may be configured symmetrically relative to a center of the current collector.

The variable peripheral portion may include an elastic material.

A radial width of the variable peripheral portion may be configured to be smaller than a radial width of the contacting peripheral portion.

The variable peripheral portion may be disposed further inward than an outer edge of the contacting peripheral portion in a radial direction.

A battery pack according to the present disclosure may include at least one battery according to the present disclosure.

A vehicle according to the present disclosure may include at least one battery pack according to the present disclosure.

### Advantageous Effects

According to the present disclosure, it is possible to provide a battery and battery pack that include a current collector having one or more variable peripheral portions and are capable of easily and firmly inserting the current collector and the electrode assembly into the cell housing even when the current collector and the electrode assembly are eccentrically positioned relative to each other, and a vehicle including the same.

In addition, according to one aspect of the present disclosure, it is possible to provide a battery and battery pack enabling the current collector to be in exact contact with the cell housing even when the current collector and the electrode assembly are eccentrically positioned relative to each other, so that the negative-electrode current collector and the cell housing can be effectively coupled to each other, and a vehicle including the same.

In addition, according to one aspect of the present disclosure, it is possible to provide a battery and battery pack with improved productivity, and a vehicle including the same.

In addition, according to one aspect of the present disclosure, it is possible to provide a battery and battery pack with improved quality, and a vehicle including the same.

In addition, according to one aspect of the present disclosure, it is possible to provide a battery and battery pack with improved electrical stability, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a conventional battery before an electrode assembly having a current collector coupled thereto is inserted and coupled to a cell housing.
FIG. 2 is a drawing illustrating a conventional battery after an electrode assembly having a current collector coupled thereto is inserted and coupled to a cell housing.
FIG. 3 is an overall perspective view illustrating a battery according to an embodiment of the present disclosure.
FIG. 4 is an overall cross-sectional view of a battery according to an embodiment of the present disclosure.
FIG. 5 is a perspective view of a current collector according to an embodiment of the present disclosure.
FIG. 6 is a plan view of a current collector according to an embodiment of the present disclosure.
FIG. 7 is a partially enlarged cross-sectional view taken along line A-A' in FIG. 3.
FIG. 8 is a partially enlarged cross-sectional view of the configuration in FIG. 4.
FIG. 9 is a cross-sectional view illustrating a variable peripheral portion of a current collector when viewed in a radial direction according to a modification of an embodiment of the present disclosure.
FIG. 10 is a partially enlarged plan view of a peripheral portion according to an embodiment of the present disclosure.
FIG. 11 is a drawing illustrating a battery pack according to an embodiment of the present disclosure.
FIG. 12 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In this specification, unless stated otherwise, the X-axis direction and the Y-axis direction may be a left-right direction and a front-back direction, or a front-back direction and a left-right direction, respectively, and the Z-axis direction perpendicular to the X-Y plane may be an up-down direction (vertical direction).

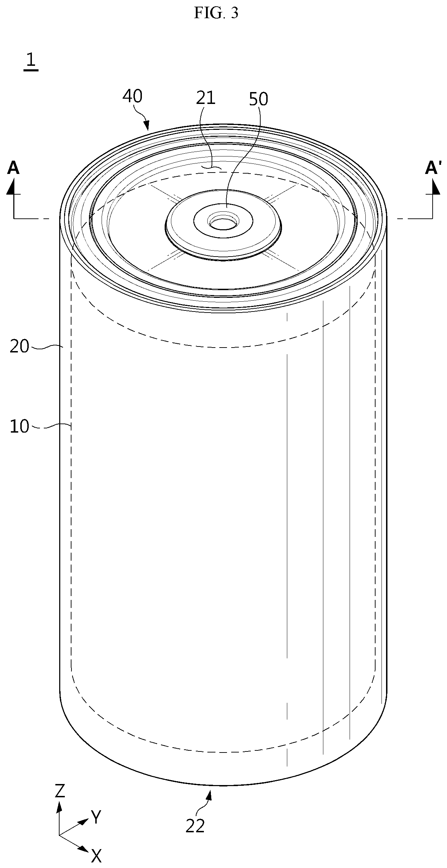

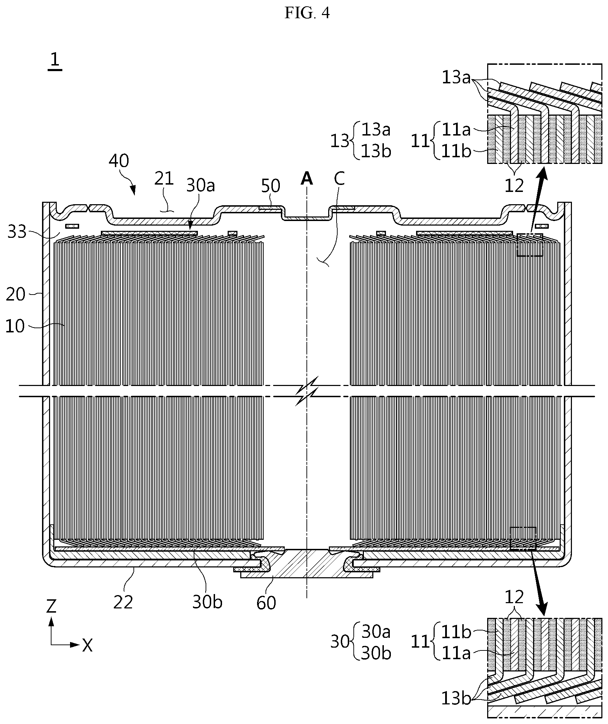

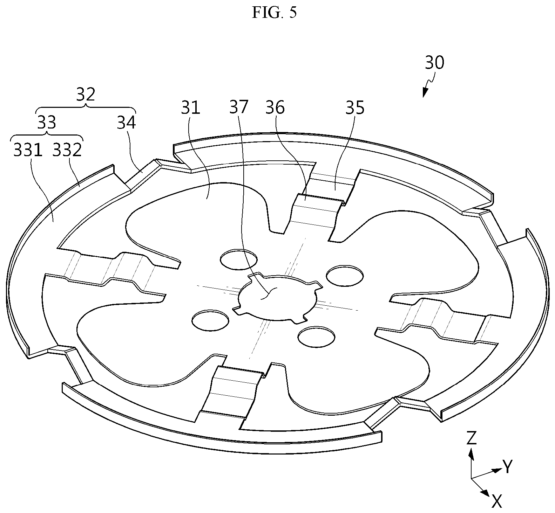

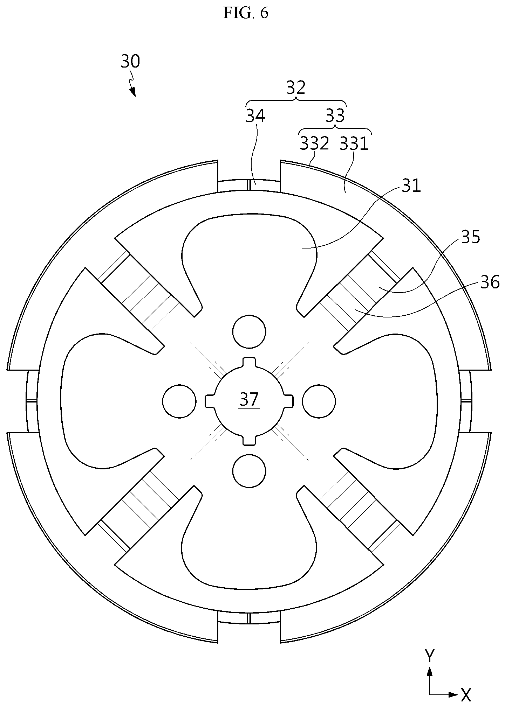

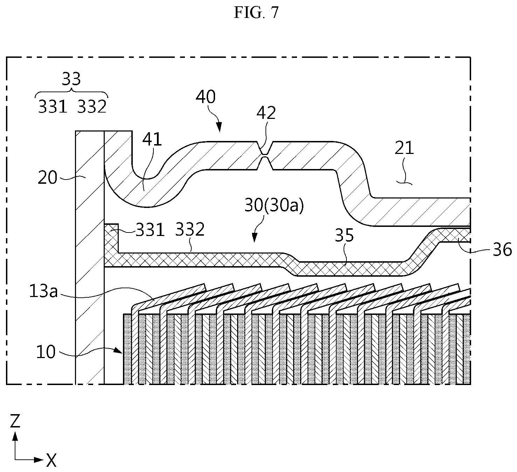

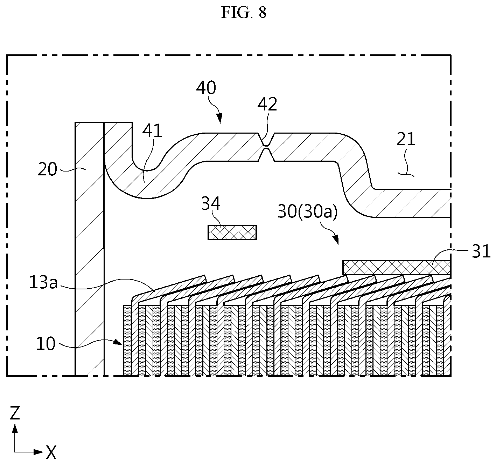

FIG. 3 is an overall perspective view illustrating a battery according to an embodiment of the present disclosure, FIG. 4 is an overall cross-sectional view of a battery according to an embodiment of the present disclosure, FIG. 5 is a perspective view of a current collector according to an embodiment of the present disclosure, FIG. 6 is a plan view of a current collector according to an embodiment of the present disclosure, FIG. 7 is a partially enlarged cross-sectional view taken along line A-A' in FIG. 3, and FIG. 8 is a partially enlarged cross-sectional view of the configuration in FIG. 4.

Referring to FIGS. 3 and 4, a battery 1 according to an embodiment of the present disclosure may include an electrode assembly 10, a cell housing 20, and a current collector 30.

The battery 1 may be a secondary battery configured to be capable of charging and discharging. The battery 1 may be a cylindrical battery.

The electrode assembly 10 may include electrodes 11 and a separator 12. The electrodes 11 may have different polarities. Specifically, the electrodes 11 may include a first electrode 11a and a second electrode 11b. The first electrode 11a may have a first polarity, and the second electrode 11b may have a second polarity opposite the first polarity. For example, the first polarity may be a negative electrode and the second polarity may be a positive electrode. The separator 12 may be interposed between the electrodes 11 of different polarities. The separator 12 may be interposed between the first electrode 11a and the second electrode 11b. The separator 12 may be an insulator.

The electrode assembly 10 may have a jelly-roll structure. That is, the electrode assembly 10 may be manufactured by winding a laminate formed by stacking at least once the first electrode 11a and the second electrode 11b in the form of sheets with the separator 12 interposed therebetween around the central winding hole C. Any structure known as a jelly-roll structure in the art may be applied without limitation to the present disclosure.

The electrode 11 may include a conductive metal material. For example, the electrode 11 may include one of copper (Cu) and aluminum (Al). In particular, the first electrode 11a may include copper, and the second electrode 11b may include aluminum.

Each electrode 11 may have a coated portion and an uncoated portion. The coated portion may be a portion on which an active material layer is coated on at least one surface of the electrode 11. For example, a negative electrode active material may be coated on the coated portion of the first electrode 11a, and a positive electrode active material may be coated on the coated portion of the second electrode 11b.

The uncoated portion may be a portion of the electrode 11 on which the active material is not coated. The electrode 11 may have a predetermined length and width, and the uncoated portion may be formed on one long side of the electrode 11.

At least a portion of the uncoated portion may be exposed to the outside of the separator 12. The uncoated portion may be used as a tab of the electrode 11.

The electrode 11 may have a plurality of foil tabs 13. The plurality of foil tabs 13 may be provided on the uncoated portion. The foil tabs 13 may be exposed to the outside of the separator 12. The plurality of foil tabs 13 may be arranged in a row from the central winding hole C toward the outer circumference. The plurality of foil tabs 13 may be formed by one or more notched parts formed by a notching process.

Among the foil tabs 13, the foil tab 13 of the first electrode 11a may be referred to as a first foil tab 13a, and the foil tab 13 of the second electrode 11b may be referred to as a second foil tab 13b. The first foil tabs 13a may be disposed at the top (e.g., +Z-axis direction end) of the electrode assembly 10, and the second foil tabs 13b may be disposed at the bottom (e.g., -Z-axis direction end) of the electrode assembly 10.

The electrode 11 may have an insulating coating portion. The insulating coating portion may be disposed at the boundary between the uncoated portion and the coated portion. The insulating coating portion may be provided in a case where the electrode 11 is the second electrode 11b so as to prevent the coated portions of the second electrode 11b and the first electrode 11a from coming into contact with each other.

The cell housing 20 may be configured to store the electrode assembly 10. The cell housing 20 may have a storage space in which the electrode assembly 10 is stored. The cell housing 20 may be configured in a cylindrical shape with a hollow space to store, for example, the electrode assembly 10 therein. The cell housing 20 may include a conductive metal material.

The cell housing 20 may have an opening 21 formed on one side. The electrode assembly 1 may be received in the cell housing 20 through the opening 21. The opening 21 may be provided, for example, at the top of the cell housing 20.

The cell housing 20 may have a closed portion 22 formed on the other side or on the opposite side of the opening 21. The closed portion 22 will be described in more detail later.

The current collector 30 may be electrically connected to the electrode assembly 10. The current collector 30 may be electrically connected to the electrode 11 of the electrode assembly 10. The current collector 30 may be welded to the foil tabs 13.

The current collector 30 may include a first current collector 30a and a second current collector 30b. The first current collector 30a may be electrically connected to the first electrode 11a. The first current collector 30a may be welded to the first foil tabs 13a. The first current collector 30a may be a negative-electrode current collector 30.

The second current collector 30b may be electrically connected to the second electrode 11b. The second current collector 30b may be welded to the second foil tabs 13b. The second current collector 30b may be a positive-electrode current collector 30.

The following description of the current collector 30 may be commonly applied to both the first current collector 30a and the second current collector 30b, unless otherwise specified.

The current collector 30 may be electrically connected to the cell housing 20. The current collector 30 may be welded to the cell housing 20. The current collector 30 may be electrically disposed between the cell housing 20 and the electrode assembly 10. In particular, the first current collector 30a may be electrically disposed between the cell housing 20 and the first electrode 11a.

Only one of the first current collector 30a and the second current collector 30b may be electrically connected to the cell housing 20. For example, the first current collector 30a may be electrically connected to the cell housing 20, whereas the second current collector 30b and the cell housing 20 may be insulated from each other by a component such as an insulator. In this case, the cell housing 20 may have the first polarity.

Hereinafter, the battery 1 according to an embodiment of the present disclosure will be described in more detail with reference to FIGS. 5 to 8.

The current collector 30 of the battery 1 according to an embodiment of the present disclosure may have a peripheral portion 32. The peripheral portion 32 may be provided at the edge of the current collector 30.

The peripheral portion 32 may be electrically connected to the cell housing 20. That is, the peripheral portion 32 may be a portion of the current collector 30, which is electrically connected to the cell housing 20. For example, a contacting peripheral portion 33, which will be described later, may be coupled to an inner surface of the cell housing 20.

The peripheral portion 32 may include one or more contacting peripheral portions 33 and one or more variable peripheral portions 34.

The contacting peripheral portion 33 may come into contact with the cell housing 20. The contacting peripheral portion 33 may come into contact with the inner surface of the cell housing 20. For example, the outer circumference of the contacting peripheral portion 33 may be in contact with the inner circumference of the cell housing 20. Preferably, most of the outer circumference of the contacting peripheral portion 33 may be in contact with the inner circumference of the cell housing 20. The outer circumference of the contacting peripheral portion 33 may be in surface contact with the inner surface of the cell housing 20.

The contacting peripheral portion 33 may be coupled to the cell housing 20 while being in contact with the cell housing 20.

The overall rigidity of the current collector 30 may be secured by the contacting peripheral portion 33.

The variable peripheral portion 34 may be configured to be variable. Specifically, the variable peripheral portion 34 may be configured such that its shape is deformable. The variable peripheral portion 34 may be deformed when pressurized by an external force. For example, when the variable peripheral portion 34 is pressurized by the contacting peripheral portion 33, the shape of the variable peripheral portion 34 may be deformed.

In the peripheral portion 32, the variable peripheral portion 34 and the contacting peripheral portion 33 may be connected to each other. For example, the contacting peripheral portion 33 may be connected to both ends of the variable peripheral portion 34. Alternatively, the variable peripheral portion 34 may be connected to both ends of the contacting peripheral portion 33. In the peripheral portion 32, the contacting peripheral portion 33 and the variable peripheral portion 34 may be configured in an integrated form.

According to the above-implemented configuration of the present disclosure, even when the current collector 30 and the electrode assembly 10 are inserted into the cell housing 20 while they are coupled to be eccentrically positioned relative to each other, the current collector 30 and the electrode assembly 10 may be easily and firmly inserted into the cell housing 20. Specifically, even when the current collector 30 and the electrode assembly 10 are coupled to each other such that their centers do not match each other, and when the current collector 30 and the electrode assembly 10 coupled as described above are inserted into the cell housing 20, since the variable peripheral portion 34 is deformable, the peripheral portion 32 may be deformed to conform to the cell housing 20, so that the current collector 30 and the electrode assembly 10 may be easily and firmly inserted into the cell housing 20. In addition, the alignment between the current collector 30 and the cell housing 20 may be allowed within a relatively wide error range. As a result, the productivity of the battery 1 may be improved.

In addition, according to the above-implemented configuration of the present disclosure, even when the current collector 30 and the electrode assembly 10 are eccentrically positioned relative to each other, the current collector 30 may come into exact contact with the cell housing 20. Specifically, since the variable peripheral portion 34 is deformable, the peripheral portion 32 may be deformed so that it may exactly come into contact with the inner surface of the cell housing 20, so that the current collector 30 and the cell housing 20 may effectively come into contact with each other to be combined. As a result, the quality of the battery 1 may be improved.

In addition, since the current collector 30, the electrode assembly 10, and the cell housing 20 are effectively coupled to each other, the electrical connection of the current collector 30 may be stably formed, thereby improving the electrical stability of the battery 1.

The contacting peripheral portion 33 may be welded to the cell housing 20. For example, the outer circumference of the contacting peripheral portion 33 and the inner circumference of the cell housing 20 may be welded to each other (see FIG. 7). Hereinafter, welding may be understood as, for example, any one of laser welding, spot welding, and ultrasonic welding.

The contacting peripheral portion 33 may include an outer peripheral portion 332, which will be described later, and the outer peripheral portion 332 may be welded to the inner circumference of the cell housing 20.

As described above, in the case where the contacting peripheral portion 33 is welded to the cell housing 20, not only may the current collector 30 be effectively fixed to the cell housing 20, but the conductive area between the current collector 30 and the cell housing 20 may also be stably secured, so that the electrical stability of the battery 1 may be improved.

The contacting peripheral portion 33 may have an arc shape. Specifically, the contacting peripheral portion 33 may have an arc shape when viewed from the direction parallel to the central axis of the central winding hole. That is, the contacting peripheral portion 33 may be a part of a circle or a part of an annular shape.

The cell housing 20 may be a cylindrical can with a circular cross-section when viewed from the direction parallel to the central axis of the central winding hole. When the cell housing 20 has the above shape, the battery 1 may be configured as a cylindrical battery 1.

The radius of curvature of the outer circumference of the contacting peripheral portion 33 may be substantially the same as the radius of the inner circumference of the cell housing 20.

When the contacting peripheral portion 33 is configured as described above, the contact area between the contacting peripheral portion 33 and the cell housing 20 may increase. Accordingly, the current collector 30 and the cell housing 20 may more effectively come into contact with each other to be combined, so that the quality of the battery 1 may be further improved.

In addition, since the stress applied to the contacting peripheral portion 33 may be effectively distributed, the higher rigidity of the contacting peripheral portion 33 may be secured. In this case, when an external force is applied so that the peripheral portion 32 is pressurized, the contacting peripheral portion 33 may not be deformed, while only the variable peripheral portion 34 is deformed.

The contacting peripheral portion 33 may include an outer peripheral portion 332. The outer peripheral portion 332 may be disposed on the outer side of the contacting peripheral portion 33. The outer peripheral portion 332 may be disposed along the outer edge of the contacting peripheral portion 33.

The outer peripheral portion 332 may extend in a direction parallel to the central axis of the central winding hole. For example, the outer peripheral portion 332 may extend along the Z-axis direction in a direction away from the electrode assembly 10. The inner circumferential surface of the cell housing 20 may extend in the Z-axis direction, and the outer peripheral portion 332 may extend in a direction parallel to the extension direction of the inner circumferential surface of the cell housing 20.

The outer peripheral portion 332 may be coupled to the cell housing 20 while being in surface contact with the inner circumferential surface thereof. The outer peripheral portion 332 may be welded to the inner circumferential surface of the cell housing 20.

In the case where the contacting peripheral portion 33 includes the outer peripheral portion 332 as described above, a greater contact area between the contacting peripheral portion 33 and the cell housing 20 may be secured. Accordingly, the current collector 30 and the cell housing 20 may more effectively come into contact with each other to be combined, so that the quality of the battery 1 may be further improved.

In addition, the outer peripheral portion 332 may improve the rigidity of the contacting peripheral portion 33. As a result, since the higher rigidity of the contacting peripheral portion 33 may be secured, when an external force is applied so that the peripheral portion 32 is pressurized, the contacting peripheral portion 33 may not be deformed, while only the variable peripheral portion 34 is deformed.

The contacting peripheral portion 33 may include a flat portion 331. The flat portion 331 may be configured to have at least a part having a flat shape. For example, the flat portion 331 may face the electrode assembly 10. For example, the flat portion 331 may extend in a direction parallel to the X-Y plane, which is perpendicular to the central axis of the central winding hole or the Z-axis. The flat portion 331 may have a predetermined width in a radial direction. The flat portion 331 may have an arc shape when viewed from the direction parallel to the central axis of the central winding hole. In the case where the contacting peripheral portion 33 includes both the outer peripheral portion 332 and the flat portion 331, its cross-section may have substantially an "L"-shape, and the stress of the contacting peripheral portion 33 in the horizontal direction or X-Y plane direction may be effectively distributed.

The variable peripheral portion 34 may be deformed so that the circumferential length is changed when pressurized. Here, the circumferential direction may be understood as the circumferential direction of the current collector 30 or the circumferential direction of the contacting peripheral portion 33. For example, when the contacting peripheral portion 33 has an arc shape as described above, the circumferential direction may be understood as a direction along the circumference, and the length in the circumferential direction may be understood as a length along the circumference. Here, the length in the circumferential direction indicates the length on the plane when viewed from the direction parallel to the central axis of the central winding hole or from the Z-axis direction, and does not indicate the three-dimensional total length of the variable peripheral portion 34.

For example, the variable peripheral portion 34 may be deformed such that its length in the circumferential direction is reduced when pressurized. Specifically, the variable peripheral portion 34 may be deformed such that its length in the circumferential direction is reduced when pressurized inward from at least one of the circumferential ends of the variable peripheral portion 34.

In the case where the variable peripheral portion 34 is configured as described above, when the current collector 30 and the electrode assembly 10 are inserted into the cell housing 20 while they are coupled to be eccentrically positioned relative to each other, the current collector 30 may be deformed to fit more appropriately into the cell housing 20.

The variable peripheral portion 34 may be configured to be folded when pressurized. That is, the variable peripheral portion 34 may be configured to be bent.

When pressurized by the contacting peripheral portion 33, the variable peripheral portion 34 may be compressed and folded in the pressurization direction.

As described above, in the case where the variable peripheral portion 34 is configured to be foldable, the circumferential length deformation of the variable peripheral portion 34 may be effectively implemented.

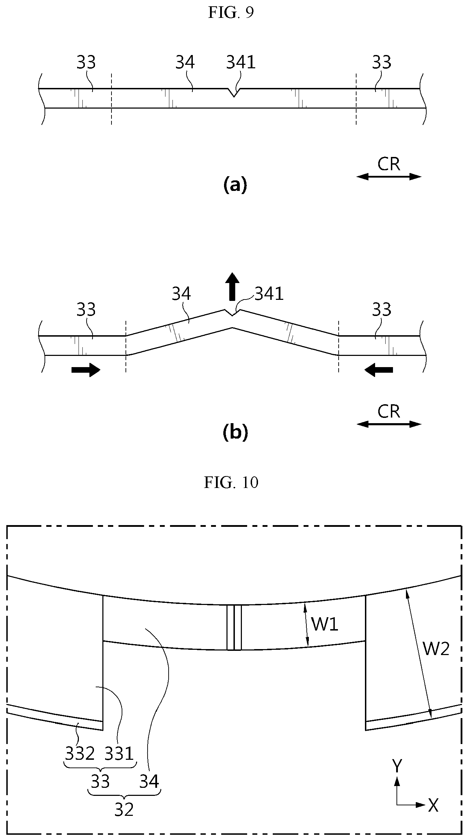

FIG. 9 is a cross-sectional view illustrating a variable peripheral portion of a current collector when viewed in a radial direction according to a modification of an embodiment of the present disclosure.

FIG. 9(a) shows a variable peripheral portion 34 in an unfolded state, and FIG. 9(b) shows a variable peripheral portion 34 in a folded state.

Referring to FIGS. 5 to 9, and particularly FIG. 9, a variable peripheral portion 34 of a current collector 30 according to a modification of an embodiment of the present disclosure may have a folding guide portion 341.

The folding guide portion 341 may be configured to guide the folding of the variable peripheral portion 34 when the variable peripheral portion 34 is pressurized. Specifically, the variable peripheral portion 34 in the state shown in FIG. 9(a) may be folded while the folding guide portion 341 protrudes in the +Z-axis direction when pressurized inward along the circumferential direction (CR) as shown in FIG. 9(b).

The folding guide portion 341 may be disposed substantially, for example, at the center of the variable peripheral portion 34. The folding guide portion 341 may be provided on one side or both sides of the variable peripheral portion 34. The folding guide portion 341 may be formed by notching on one side or both sides of the variable peripheral portion 34.

In the case where the variable peripheral portion 34 includes the folding guide portion 341, the folding of the variable peripheral portion 34 may be guided at a specific position where the folding guide portion 341 is located, which has the advantage in that the folding of the variable peripheral portion 34 may be performed at a desired position.

The variable peripheral portion 34 may be configured to be folded, when pressurized, while protruding in a direction away from the electrode assembly 10. For example, the variable peripheral portion 34 may be folded while protruding in the +Z-axis direction or upward direction.

In the case where the variable peripheral portion 34 is configured as described above, the variable peripheral portion 34 may be prevented from coming into contact with the electrode assembly 10 while being folded, thereby preventing damage to the electrode assembly 10. For example, if the variable peripheral portion 34 is in contact with the electrode assembly 10, the welding heat generated during welding the contacting peripheral portion 33 and the cell housing 20 may be transmitted to the electrode assembly 10 through the variable peripheral portion 34, or the variable peripheral portion 34 may pressurize the electrode assembly 10 so that the electrode assembly 10 may be deformed. However, in the case where the variable peripheral portion 34 is configured to be folded while protruding away from the electrode assembly 10 as described above, thereby preventing contact with the electrode assembly 10, it is possible to effectively prevent damage to the electrode assembly 10.

Meanwhile, unlike the description above, the variable peripheral portion 34 may also be folded while protruding toward the electrode assembly 10. In this case, it may be desirable to place the variable peripheral portion 34 at a position where it does not come into contact with the electrode assembly 10 even when it protrudes to the maximum.

Referring to FIGS. 5 to 8, the peripheral portion 32 may have a plurality of contacting peripheral portions 33 and variable peripheral portions 34. The plurality of contacting peripheral portions 33 and variable peripheral portions 34 may be arranged alternately. Specifically, one variable peripheral portion 34 may be disposed between two adjacent contacting peripheral portions 33, and one contacting peripheral portion 33 may be disposed between two adjacent variable peripheral portions 34.

The peripheral portion 32 may have, for example, four contacting peripheral portions 33 and four variable peripheral portions 34, as shown in the drawing, and the contacting peripheral portions 33 and variable peripheral portions 34 may be disposed alternately along the circumferential direction.

In this case, the variable peripheral portions 34 may be distributed and disposed at various positions on the peripheral portion 32, so that the current collector 30 may be deformed in various directions.

The peripheral portion 32 may be configured symmetrically relative to the center of the current collector 30. Specifically, the contacting peripheral portions 33 and the variable peripheral portions 34 of the peripheral portion 32 may be arranged and formed symmetrically in the rotational direction around the center of the current collector 30. For example, as shown in the drawing, four contacting peripheral portions 33 and four variable peripheral portions 34 may be disposed symmetrically with the same shape around the center of the current collector 30.

In the case where the peripheral portion 32 is configured as described above, it may be easy to secure flatness between the current collector 30 and the electrode assembly 10. In addition, the stress applied to the current collector 30 may be uniformly distributed.

The variable peripheral portion 34 may include an elastic material. For example, the variable peripheral portion 34 may include a metal material having elasticity.

In the case where the variable peripheral portion 34 includes an elastic material, there is an advantage in that the variable peripheral portion 34 may be easily deformed while the current collector 30 comes into close contact with the cell housing 20 by the elastic restoring force.

Meanwhile, the variable peripheral portion 34 may be manufactured in an integrated form with the remaining part of the current collector 30, and in this case, the current collector 30 may be formed entirely of the same material including the elastic material.

FIG. 10 is a partially enlarged plan view of a peripheral portion according to an embodiment of the present disclosure.

Referring to FIGS. 5 to 8 and FIG. 10, especially FIG. 10, the radial width of the variable peripheral portion 34 may be configured to be smaller than the radial width of the contacting peripheral portion 33. Specifically, the radial width of the variable peripheral portion 34 may have a first width W1, and the radial width of the contacting peripheral portion 33 may have a second width W2 smaller than the first width W1.

In the case where the peripheral portion 32 is formed as described above, there is an advantage in that, when the peripheral portion 32 is pressurized, deformation of the contacting peripheral portion 33 may be prevented, while deformation of the variable peripheral portion 34 may be effectively induced.

The variable peripheral portion 34 may be disposed further inward than the contacting peripheral portion 33. Specifically, the variable peripheral portion 34 may be disposed on the inner edge, other than the outer edge, of the contacting peripheral portion 33 in the radial direction.

In this case, when the current collector 30 is inserted into the cell housing 20, the contacting peripheral portion 33 may come into contact with the cell housing 20, but the variable peripheral portion 34 may be spaced apart from the cell housing 20. Therefore, interference between the variable peripheral portion 34 and the cell housing 20 may be effectively prevented, and thus deformation of the variable peripheral portion 34 may be reliably performed.

The current collector 30 may include an electrode-coupling portion 31. The electrode-coupling portion 31 may be coupled to the electrode assembly 10. That is, in the current collector 30, the electrode-coupling portion 31 may be a portion coupled to the electrode assembly 10. The electrode-coupling portion 31 may be coupled to the foil tab 13 of the electrode 11. The electrode-coupling portion 31 may be electrically connected to the foil tab 13 while being in surface contact with the same. The electrode-coupling portion 31 may be welded to the foil tab 13.

The electrode-coupling portion 31 may be indirectly connected to the peripheral portion 32. That is, the electrode-coupling portion 31 and the peripheral portion 32 may be configured such that they are connected to each other by interposing another configuration between the electrode-coupling portion 31 and the peripheral portion 32, instead of being directly connected to each other. As a result, in the current collector 30, the electrode-coupling portion 31 and the peripheral portion 32 may be spaced apart from each other so that an empty space may be formed between them in at least some areas. The electrode-coupling portion 31 and the peripheral portion 32 may be indirectly connected to each other, for example, by a bridge 35 described below.

The electrode-coupling portion 31 may be disposed inward from the peripheral portion 32. For example, the electrode-coupling portion 31 may be disposed on the radially inner side of the peripheral portion 32. For example, the electrode-coupling portion 31 may occupy approximately the central portion of the current collector 30 on the inner side of the peripheral portion 32.

As described above, when the electrode-coupling portion 31 is indirectly connected to the peripheral portion 32, interference between the electrode-coupling portion 31 and the peripheral portion 32 may be effectively prevented during the assembly process of the battery 1. Specifically, when the current collector 30 and the electrode assembly 10 are inserted and coupled to the cell housing 20 while they are coupled to be eccentrically positioned relative to each other, the peripheral portion 32 and the electrode-coupling portion 31 are likely to interfere with each other when the current collector 30 is deformed by the pressure of the cell housing 20. However, in the case where the electrode-coupling portion 31 is indirectly connected to the peripheral portion 32 as described above, a certain degree of relative positional change is allowed between the peripheral portion 32 and the electrode-coupling portion 31, so that interference between the electrode-coupling portion 31 and the peripheral portion 32 may be effectively prevented.

Meanwhile, the electrode-coupling portion 31 may be configured as a single configuration of the current collector 30.

In the case where the current collector 30 has both the peripheral portion 32 and the electrode-coupling portion 31, the current collector 30 and the cell housing 20, and the current collector 30 and the electrode assembly 10 may be coupled, respectively, by separate welding processes, so that double welding of at least one of the peripheral portion 32 and the electrode-coupling portion 31 may be prevented.

A hollow hole 37 may be formed in the central portion of the current collector 30 or the central portion of the electrode-coupling portion 31. The hollow hole 37 may be configured to allow an electrolyte to be injected into the interior of the electrode assembly 10.

The current collector 30 may further include a bridge 35. The bridge 35 may be configured to connect the peripheral portion 32 and the electrode-coupling portion 31 to each other.

The bridge 35 may be located between the peripheral portion 32 and the electrode-coupling portion 31. At least one bridge 35 may be provided. A plurality of bridges 35 may be provided. For example, the current collector 30 may have four bridges 35 as shown in the drawing. In the current collector 30, the bridges 35 may be configured symmetrically in the rotational direction around the central portion.

The bridge 35 may extend toward both the peripheral portion 32 and the electrode-coupling portion 31. For example, the bridge 35 may extend from one of the peripheral portion 32 and the electrode-coupling portion 31 to the other. For example, the bridge 35 may extend along the radial direction. The bridge 35 may be configured so that its length is variable.

The bridge 35 of the current collector 30 may have a variable portion 36. The variable portion 36 may be configured to allow the length of the bridge 35 to vary. Specifically, when a force is applied to the bridge 35 in the longitudinal direction of the bridge 35, the variable portion 36 may be compressed or expanded, so that the length of the bridge 35 may be reduced or increased. The variable portion 36 may be configured, for example, in a convex and/or concave shape or in a bent shape.

Referring back to FIGS. 3, 4, 7, and 8, the battery according to the present disclosure may further include a can lid 40.

The can lid 40 may be coupled to the end of the opening 21 side of the cell housing 20. That is, the can lid 40 may be coupled to one end of the cell housing 20 where the opening 21 is formed. The can lid 40 may be configured to cover the opening 21. The can lid 40 may be disposed at the outermost side of the cell housing 20 and may form a part of the exterior of the battery 1.

The can lid 40 may be fitted to the end of the opening 21 side of the cell housing 20. The can lid 40 may have an edge 41. The edge 41 may be provided along the perimeter of the can lid 40, and may have a U-shaped cross-section. The edge 41 may be forcibly fitted to the end of the opening 21 side of the cell housing 20. The edge 41 may be welded to the end of the opening 21 side of the cell housing 20 while being forcibly fitted thereto.

Alternatively, the can lid 40 may be coupled to the end of the cell housing 20 while resting on the opening 21. Unlike what is shown in the drawings, the can lid 40 may have a butt portion configured to rest on the end of the opening 21 side of the cell housing 20. The butt portion may be welded to the end of the opening 21 side of the cell housing 20 in the resting state.

The current collector 30 may be located between the can lid 40 and the electrode assembly 10. The can lid 40 may cover the current collector 30.

A vent notch 42 may be provided in the can lid 40. The vent notch 42 may be formed by notching such that it is to be broken when the internal pressure of the battery 1 reaches a predetermined level or higher.

A liquid inlet may be formed in the can lid 40 so that it is open to be exposed to the outside. The liquid inlet may be configured so that an electrolyte is injected to the interior of the battery 1. A plug 50 may be coupled to the can lid 40, and the plug 50 may be configured to cover the liquid inlet.

In a case where the battery 1 includes the can lid 40, there is an advantage in that the electrode assembly 10 and the current collector 30 may be firmly and stably fixed even without configurations such as a beading portion and a crimping portion.

Referring back to FIGS. 3 and 4, the battery 1 according to the present disclosure will be described in more detail.

The cell housing 20 may have a closed portion 22. The closed portion 22 may be formed on the other side of the cell housing 20 or the lower side thereof (in the -Z-axis direction). The closed portion 22 may be configured in a closed form. A terminal 60 may be disposed in the closed portion 22. The terminal 60 may be configured to pass through the closed portion 22 such that at least a portion thereof is exposed to the outside. The terminal 60 may be provided in the form of a rivet. The terminal 60 may be electrically connected to the second electrode 11b, and may have the second polarity. The terminal 60 may be coupled to the second current collector 30b by welding or the like. The terminal 60 may be configured as a positive electrode terminal 60.

The closed portion 22 may have the first polarity. As described above, the cell housing 20 may be electrically connected to the first electrode 11a to have the first polarity. An insulating gasket may be disposed between the closed portion 22 and the terminal 60 to insulate them.

An insulator may be disposed between the closed portion 22 and the second current collector 30b to insulate them. The insulator may be configured to insulate the electrode assembly and the cell housing 20 from each other.

Preferred embodiments of the battery 1 according to the present disclosure have been described above. The technical idea of the present disclosure is not limited to the embodiments, and may encompass a combination thereof.

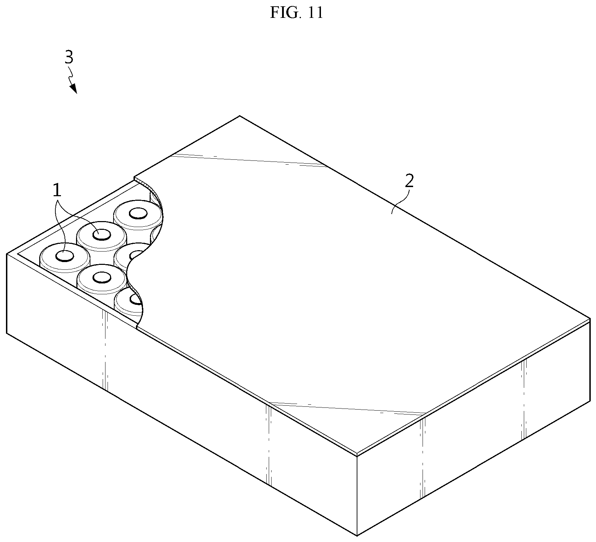

FIG. 11 is a drawing illustrating a battery pack according to an embodiment of the present disclosure.

Referring to FIG. 11, a battery pack 3 according to the present disclosure may include at least one battery 1 according to the present disclosure. The battery pack 3 may include a pack case 2 that stores one or more batteries 1.

For the convenience of drawing, components such as a busbar for electrical connection of the batteries 1, a cooling unit, and an external terminal are omitted from the drawing. The structure of multiple batteries 1 for manufacturing the battery pack 3 has been described in the embodiments above.

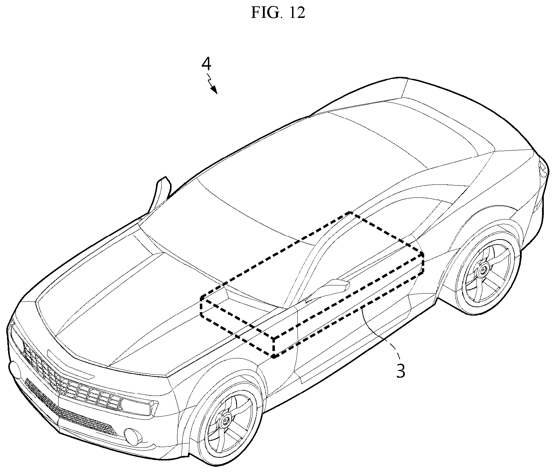

FIG. 12 is a drawing illustrating a vehicle according to an embodiment of the present disclosure.

Referring to FIG. 12, the battery pack 3 according to an embodiment of the present disclosure may be applied to a vehicle 4 such as an electric vehicle or a hybrid vehicle. That is, a vehicle 4 according to the present disclosure may include the battery pack 3 according to the present disclosure. The battery pack 3 may be installed in a body frame under a vehicle seat or in a trunk space. In addition to the battery pack 3, the vehicle 4 according to the present disclosure may further include various other components provided in the vehicle 4. For example, the vehicle 4 according to an embodiment of the present disclosure may further include a car body, a motor, a control device such as an ECU (electronic control unit), or the like, in addition to the battery pack 3 according to the present disclosure.

In addition, that the battery pack 3 according to the present disclosure may also be installed in other devices, apparatuses, and facilities such as an energy storage system using secondary batteries, in addition to the vehicle 4.

Meanwhile, although terms indicating directions such as up(ward) and down(ward) directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the above-described embodiments should be considered in a descriptive sense rather than a limiting sense. That is, the true scope of the present disclosure is defined by the claims, and all variations within the equivalent scope thereof should be interpreted as being included in the present disclosure.

### [Description of Reference numerals]

1: Battery
2: Pack case
3: Battery pack
4: Vehicle
10: Electrode assembly
11: Electrode
11a: First electrode
11b: Second electrode
12: Separator
13: Foil tab
13a: First foil tab
13b: Second foil tab
20: Cell housing
21: Opening
22: Closed portion
30: Current collector
30a: First current collector
30b: Second current collector
31: Electrode-coupling portion
32: Peripheral portion
33: Contacting peripheral portion
331: Flat portion
332: Outer peripheral portion
34: Variable peripheral portion
341: Folding guide portion
35: Bridge
36: Variable portion
37: Hollow hole
40: Can lid
41: Edge
42: Vent notch
50: Plug
60: Terminal
C: Central winding hole
A: Central axis
W1: First width
W2: Second width

## Claims

1. A battery comprising:
an electrode assembly configured by winding a first electrode and a second electrode with a separator interposed therebetween around a central axis of a central winding hole;
a cell housing configured to store the electrode assembly and having an opening on one side; and
a current collector electrically connected to the electrode assembly and the cell housing, respectively, and having a peripheral portion on its edge,
wherein the peripheral portion comprises:
one or more contacting peripheral portions that are in contact with the cell housing; and
one or more variable peripheral portions configured to be deformable.

2. The battery according to claim 1,
wherein the contacting peripheral portion
is welded to the cell housing.

3. The battery according to claim 1,
wherein the contacting peripheral portion
has an arc shape when viewed from a direction parallel to the central axis of the central winding hole.

4. The battery according to claim 1,
wherein the contacting peripheral portion
comprises an outer peripheral portion disposed on an outer side of the contacting peripheral portion and extending in a direction parallel to the central axis of the central winding hole.

5. The battery according to claim 1,
wherein the variable peripheral portion
is configured such that its circumferential length is changed when pressurized.

6. The battery according to claim 5,
wherein the variable peripheral portion
is configured to be folded when pressurized.

7. The battery according to claim 6,
wherein the variable peripheral portion
comprises a folding guide portion configured to guide the folding when pressurized.

8. The battery according to claim 6,
wherein the variable peripheral portion
is configured to be folded while protruding in a direction away from the electrode assembly when pressurized.

9. The battery according to claim 1,
wherein the peripheral portion
comprises a plurality of contacting peripheral portions and a plurality of variable peripheral portions, and
wherein the plurality of contacting peripheral portions and the plurality of variable peripheral portions are disposed alternately with each other.

10. The battery according to claim 1,
wherein the peripheral portion
is configured symmetrically relative to a center of the current collector.

11. The battery according to claim 1,
wherein the variable peripheral portion
comprises an elastic material.

12. The battery according to claim 1,
wherein a radial width of the variable peripheral portion
is configured to be smaller than a radial width of the contacting peripheral portion.

13. The battery according to claim 1,
wherein the variable peripheral portion
is disposed further inward than an outer edge of the contacting peripheral portion in a radial direction.

14. A battery pack comprising at least one battery according to any one of claims 1 to 13.

15. A vehicle comprising at least one battery pack according to claim 14.
